**Europäisches Patentamt**

**European Patent Office**

**Office européen des brevets**

(11) Numéro de publication: **0 081 154**
**B1**

(12) **FASCICULE DE BREVET EUROPÉEN**

(45) Date de publication du fascicule du brevet:
14.01.87

(21) Numéro de dépôt: **82110900.6**

(22) Date de dépôt: **25.11.82**

(51) Int. Cl.⁴: **H 01 B 3/04,** H 02 K 3/32,
H 02 K 3/34

(54) Procédé de guipage par un ruban pour isolation élémentaire de conducteurs.

(30) Priorité: **02.12.81 FR 8122546**

(43) Date de publication de la demande:
**15.06.83 Bulletin 83/24**

(45) Mention de la délivrance du brevet:
**14.01.87 Bulletin 87/3**

(84) Etats contractants désignés:
**AT BE CH DE FR GB IT LI NL SE**

(56) Documents cité:
**EP-A-0 031 555**
**FR-A-1 554 935**
**FR-A-1 576 958**
**GB-A-1 024 700**
**GB-A-1 193 082**
**GB-A-1 208 718**

(73) Titulaire: **ALSTHOM, 38, avenue Kléber, F-75784
Paris Cédex 16 (FR)**

(72) Inventeur: **Anton, Alain, Rue de Beauregard
Chaponnay, F-69360 Saint- Symphorien d'Ozon (FR)**
Inventeur: **Thiriet, Joel, Le Bourg Quincieux,
F-69650 Saint- Germain au Mont d'Or (FR)**

(74) Mandataire: **Weinmiller, Jürgen, Lennéstrasse 9,
D-8133 Feldafing (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé de réalisation d'une isolation par guipage par un ruban d'un conducteur, et plus particulièrement d'un conducteur entrant dans la constitution de machines destinées à subir une imprégnation par une résine isolante, ce conducteur comportant une première couche formée par un papier mica poreux, reposant sur une deuxième couche constituant un support thermofusible, ladite première couche étant revêtue sur son autre face par une troisième couche assurant notamment la protection mécanique du ruban.

Actuellement, l'isolation des conducteurs élémentaires, tels que des fils présentant une section rectangulaire de 2 x 8 mm par exemple, est réalisée soit par emaillage, soit par guipage au moyen de fibres de verre, d'amiante, de films de papier, etc..., soit en combinant émaillage et guipage.

L'isolation élémentaire constituée par un émail présente de bonnes caractéristiques d'isolation entre conducteurs, mais donne des difficultés d'accrochage pour les résines d'imprégnation utilisées lors de l'isolation de la machine.

Si l'isolation par guipage, en particulier au moyen de fibres textiles, présente de bonnes caractéristiques d'accrochage vis-à-vis de la résine d'imprégnation, par contre les rigidités diélectriques obtenues sont souvent médiocres et obligent à 1'emploi de renfort dans les bobines d'entrée.

On a essayé de trouver des compromis entre ces moyens en couplant l'émaillage, facteur de rigidité diélectrique, avec le guipage apportant 1'adhérence avec la résine d'imprégnation; néanmoins ces solutions ne sont pas satisfaisantes en ce qui concerne la rétention de la résine d'imprégnation au niveau des conducteurs élémentaires.

Il a été décrit dans le document FR-A-1 554 935 un ruban de guipage, comportant un matériau support extensible tel qu'un tissu ou un voile polyester, une ou plusieurs couches de mica fin et une couche superficielle en tissu de soie de verre, le support extensible étant du côté extérieur, opposé au conducteur, l'ensemble étant imprégné par une résine synthétique exempte de solvant et fluide à la température ambiante. Cette isolation n'est pas satisfaisante en ce qui concerne la rétention de la résine d'imprégnation au niveau des conducteurs élémentaires.

La présente invention a pour but de procurer une isolation élémentaire d'un conducteur très adhérente au conducteur élémentaire et très homogène du point de vue mécanique.

Le procédé selon l'invention est caractérisé en ce que l'on dispose le ruban de sorte que le support thermofusible soit au contact du conducteur.

Le papier mica assure la rigidité diélectrique de l'isolation élémentaire, une bonne homogénéité de l'ensemble du conducteur avec son mur.

Le papier mica assure notamment une bonne homogénéité de l'ensemble du conducteur avec son mur isolant, et constitue un réservoir de résine pour l'agglomération du conducteur élémentaire.

Les propriétés mécaniques du papier mica sont renforcées par la deuxième couche qui permet ainsi la bonne mise en oeuvre dudit papier mica. Par ailleurs, le caractère thermofusible de la deuxième couche assure le collage entre le ruban et le conducteur.

Pour constituer le support thermofusible, on peut utiliser des feutres non tissés è base de polyester, des films à base de polyester, des films à base de polymères fluorés, tel que du polytétrafluoréthylène par exemple, dont la température de fusion est comprise entre 200 et 300°C.

Les feutres non tissés présentent de préférence un grammage (poids par unité de surface) compris entre 30 et 60 g/m$^2$ et une épaisseur comprise entre 45.10$^{-3}$ et 90.10$^{-3}$ mm.

Les films à base de polyester ou de polymères fluorés présentent de préférence une épaisseur comprise entre 13.10$^{-3}$ et 50.10$^{-3}$ mm.

La troisième couche située de l'autre côté du papier mica par rapport au support thermofusible assure la protection mécanique lors de la mise en oeuvre du ruban è la machine de guipage. Elle peut avantageusement être constituée par un tissu de verre présentant un grammage compris entre 19 et 40 g/cm$^2$ et une épaisseur comprise entre 28.10$^{-3}$ et 50.10$^{-3}$ mm.

La structure externe du conducteur guipé favorise l'accrochage de l'isolation masse.

La mise en oeuvre de l'invention permet ainsi d'éviter tout risque de décollement de l'isolation même vis-à-vis du conducteur élémentaire et du conducteur guipé.

Comme papier de mica, il a été utilisé des grammages compris de préférence entre 40 et 120 g/m$^2$, avec comme grammage préférentiel des poids compris entre 60 et 90 g/m$^2$, l'épaisseur étant comprise entre 30.10$^3$ et 110.10$^{-3}$ mm. La qualité du papier de mica conditionne la rétention de la résine. Il a été utilisé des papiers à pâte mécanique, chimique, et des mélanges de pâte mécanique et de pâte chimique, de façon à avoir une porosité du ruban pouvant varier entre 200 secondes et 20.000 secondes, mesurée par la méthode classique de GURLEY HILL.

La liaison entre les différentes couches peut être réalisée au moyen de résines époxydes, ou par thermofusion entre la première et la deuxième couches.

Ainsi, pour le guipage de conducteurs élémentaires de machines isolées en classe F, devant subir une imprégnation avec une résine époxyde, la liaison entre le papier mica et le support peut utiliser des résines époxydes, appliquées en poudre avec un point de fusion compris entre 90 et 160°C, ou par vernissage à l'aide d'une solution de résine époxyde. Il peut être efficacement utilisé le liant décrit dans le document de brevet FR-A 79 31 657 du 26 décembre 1979. La liaison entre le papier mica et la troisième couche peut être réalisée en utilisant les mêmes résines.

Pour les guipages de conducteurs élémentaires de machines isolées en classe H, devant subir une imprégnation à l'aide d'une résine silicone sans solvant, époxyde haute temperature ou toute résine à haute performance thermique, le ruban est obtenu par contre-collage du papier mica décrit ci-dessus sur un film à base de polymères fluorés (PTFE) à la fusion de celui-ci sur une calandre appropriée. Ultérieurement, la fusion de ce même film PTFE assure le collage entre le cuivre du conducteur et le ruban de guipage. Dans ce cas également le papier porte sur sa face opposée au film de polymère fluoré une troisième couche.

Le ruban de guipage utilisé dans l'invention permet d'obtenir des fils ronds ou méplats guipés, utilisables comme conducteurs élémentaires pour la réalisation de sections de bobines et de barres de machines électriques. Ces fils sont utilisables en particulier, pour la constitution de barres ROEBELS. Cette isolation élémentaire à la faculté de s'imprégner à saturation avec la résine d'imprégnation de la machine, lors des opérations classiques d'imprégnation sous vide et pression. La rétention de résine dans le ruban peut varier de 20 à 50% en masse par rapport à la masse totale du ruban, suivant la qualité du papier de mica utilisée. Le choix est défini notamment par la géométrie des conducteurs élémentaires, par l'épaisseur du mur isolant et les caractéristiques de la résine d'imprégnation.

Un tel procédé permet une parfaite homogénéité de tout le système isolant entre le conducteur élémentaire et la masse de la machine. Les conducteurs élémentaires sont parfaitement agglomérés par la résine d'imprégnation, grâce à la bonne rétention de celle-ci dans le système de guipage.

Il faut noter également que le tissu de verre fin constituant la troisième couche permet d'améliorer la cohésion entre le ruban de guipage et le ruban d'isolation mis en place ultérieurement.

Le ruban utilisé dans l'invention permet de réaliser une bonne agglomération mécanique de l'ensemble des conducteurs élémentaires, et une parfaite conductibilité thermique entre le conducteur élémentaire, et les autres constituants métalliques, la conduction s'effectuant à travers le mur isolant. Cette homogénéité permet de minimiser, toutes choses égales par ailleurs, les pertes diélectriques, d'amoindrir les décharges partielles, surtout au niveau du cuivre, et d'améliorer la tenue mécanique en vieillissement sous contrainte alternatif de l'isolation vis-à-vis du conducteur élémentaire.

On donnera ci-après, à titre illustratif et nullement limitatif, un tableau des épaisseurs des différents constituants du ruban de guipage utilisé dans l'invention en fonction du grammage, puis des exemples de rubans

## PAPIER MICA

| Poids | Epaisseur en 1/1000 mm |
|---|---|
| $40 \ g/m^2$ | 34 |
| $45 \ g/m^2$ | $39 \pm 5$ |
| $50 \ g/m^2$ | $43 \pm 7$ |
| • $60 \ g/m^2$ | $\begin{cases} 50 \pm 8 \\ 44 \pm 10 \end{cases}$ |
| $75 \ g/m^2$ | $62 \pm 13$ |
| $80/g/m^2$ | $55 \pm 11$ |
| $90 \ g/m^2$ | $70 \pm 10$ |
| • $120 \ g/m^2$ | $\begin{cases} 93 \pm 13 \\ 74 \pm 15 \\ 80 \pm 15 \end{cases}$ |

• suivant la nature du papier de mica

## TISSU DE VERRE

| Poids | Epaisseur en 1/1000 mm |
|---|---|
| 19 $g/m^2$ | 28 |
| 24 $g/m^2$ | 30 |
| 33 $g/m^2$ | 37 |
| 45 $g/m^2$ | 50 |

## FEUTRE POLYESTER

| Poids | Epaisseur en 1/1000 mm |
|---|---|
| 30 $g/m^2$ | 45 |
| 40 $g/m^2$ | 65 |
| 60 $g/m^2$ | 90 |

Pour les films en polymère fluoré ou polyester, on peut adopter les épaisseurs suivantes en 1/1000 mm :

13,    19,    25,    50

Exemples de rubans

| | | épaisseur 1/1000 mm |
|---|---|---|
| A/ | tissu de verre | 30 |
| | papier mica | 50 |
| | feutre polyester | 65 |
| | résine de liaison entre couches | 16 |
| | | ———— |
| | | 161 |

Epaisseur nominale du ruban 16/100 mm

| | | |
|---|---|---|
| tissu de verre | | 30 |
| papier mica | | 50 |
| film PTFE | | 50 |
| résine de liaison entre couches | | 8 |
| | | ———— |
| | | 138 |

4

Epaisseur nominale du ruban 14/100 mm

Le ruban est placé sur le conducteur de cuivre en l'enroulant de façon hélicoïdale avec un recouvrement.

Dans le cas de ruban de guipage composé par un tissu de verre, un papier de mica et un feutre polyester (exemple A), il est intéressant d'avoir un recouvrement compris entre une faible valeur, de l'ordre de 1 mm, jusqu'à une valeur pouvant atteindre ou même dépasser la moitié de la largeur du ruban, la pose la plus classique étant celle d'un ruban mis à demi recouvrement, c'est-à-dire, un recouvrement de 7 mm pour un ruban de 14 mm de large.

Dans le cas de l'exemple B où le ruban est composé par un tissu de verre, un papier de mica et un film continu en PTFE, il est au contraire préférable d'avoir un recouvrement faible de l'ordre de 1 mm.

Les valeurs indiquées ci-dessus ne le sont, bien entendu, qu'à titre illustratif.

Le ruban est collé sur le conducteur en cuivre par fusion de sa partie thermofusible, c'est-à-dire fusion du feutre de polyester dans l'exemple A ou du film de PTFE dans l'exemple B.

La température à atteindre pour les opérations de fusion, doit être dans le premier cas de l'ordre de 250-270°C, et dans le second cas de l'ordre de 280-300°C.

Une telle fusion s'opère généralement dans un four qui peut être chauffé soit par rayonnement infrarouge, soit par induction, soit par tout autre moyen permettant de porter le conducteur pendant des temps relativement courts, de l'ordre de quelques dizaines de secondes, à la température voulue.

**Revendications**

1/ Procédé de réalisation d'une isolation élémentaire par guipage par un ruban d'un conducteur entrant dans la constitution de machines destinées à subir une imprégnation par une résine isolante, ce ruban comportant une première couche formée par un papier mica poreux, reposant sur une deuxième couche constituant un support thermofusible, ladite première couche étant revêtue sur son autre face par une troisième couche assurant notamment la protection mécanique du ruban, caractérisé en ce que l'on dispose le ruban de sorte que le support thermofusible soit au contact du conducteur.

2/ Procédé selon la revendication 1, caractérisé par le fait que l'on choisit le matériau du support thermofusible dans le groupe formé par les feutres non tissés à base de polyester, les films à base de polyester, les films à base de polymères fluorés.

3/ Procédé selon la revendication 2, caractérisé par le fait que l'on utilise un feutre à base de polyester présentant un grammage compris entre 30 et 60 g/m$^2$ et une epaisseur comprise entre $45.10^{-3}$ et $90.10^{-3}$ mm.

4/ Procédé selon la revendication 2, caractérisé par le fait que l'on utilise un film à base de polyester ou à base de polymères présentant une épaisseur comprise entre $13.10^{-3}$ et $50.10^{-3}$ mm.

5/ Procédé selon l'une des revendications 1 à 4, caractérisé par le fait que 1' on utilise comme matériau constitutif de la troisième couche un tissu de verre.

6/ Procédé selon la revendication 5, caractérisé par le fait que l'on utilise un tissu de verre présentant un grammage compris entre 19 et 40 g/m$^2$, et d' epaisseur comprise entre $28.10^{-3}$ et $50.10^{-3}$ mm.

7/ Procédé selon l'une des revendications 1 à 6, caractérisé par le fait que l'on réalise la solidarisation de la première couche en papier mica aux autres couches au moyen de résines époxydes.

8/ Procédé selon l'une des revendications 1 à 6, caractérisé par le fait que l'on réalise la solidarisation entre la première et la deuxième couche par thermofusion.

9/ Procédé selon l'une des revendications 1 à 8, caractérisé par le fait que l'on utilise un papier mica présentant un grammage compris entre 40 et 120 g/m$^2$ et de préférence entre 60 et 90 g/m$^2$, et d'épaisseur comprise entre $30.10^{-3}$ mm et $110.10^{-3}$ mm.

**Patentansprüche**

1. Verfahren zur Herstellung einer elementaren Isolierung durch Wickeln eines Bandes um einen Leiter, der zu den Bestandteilen einer Maschine gehört, die mit einem Isolierharz imprägniert werden soll, wobei dieses Sand eine erste von einem porösen Glimmerpapier gebildete Schicht aufweist, die auf einer zweiten Schicht liegt, welche einen wärmeschmelzenden Träger bildet, wobei diese erste Schicht auf ihrer anderen Seite mit einer dritten Schicht bedeckt ist, die insbesondere den mechanischen Schutz des Bandes bewirkt, dadurch gekennzeichnet, daß das Band so angeordnet wird, daß der wärmeschmelzende Träger sich in Kontakt mit dem Leiter befindet.

2. Verfahren nach Anspruch 1, dadurch gekennzeichnet, daß das Material des wärmeschmelzenden Trägers aus der Gruppe ausgewählt wird, die von den nicht-gewebten Filzen auf der Basis von Polyester, den Filmen auf der Basis von Polyester und den Filmen auf der Basis von fluorierten Polymeren gebildet wird.

3. Verfahren nach Anspruch 2, dadurch gekennzeichnet, daß man einen Filz auf der Basis von Polyester verwendet, der ein spezifisches Gewicht zwischen 30 und 60 g/m$^2$ und eine Dicke zwischen $40.10^{-3}$ und $90.10^{-3}$ mm aufweist.

4. Verfahren nach Anspruch 2, dadurch gekennzeichnet, daß ein Film auf der Basis von Polyester oder auf der Basis von Polymeren verwendet wird, der eine Dicke zwischen $13.10^{-3}$ und $50.10^{-3}$ mm aufweist.

5. Verfahren nach einem der Ansprüche 1 bis 4, dadurch gekennzeichnet, daß als Material für die dritte Schicht ein Glasgewebe verwendet wird.

6. Verfahren nach Anspruch 5, dadurch gekennzeichnet, daß ein Glasgewebe verwendet wird, das ein spezifisches Gewicht zwischen 19 und 40 g/m² und eine Dicke zwischen $28.10^{-3}$ und $50.10^{-3}$ mm aufweist.

7. Verfahren nach einem der Ansprüche 1 bis 6, dadurch gekennzeichnet, daß die feste Verbindung der ersten Schicht aus Glimerpapier mit den anderen Schichten mittels Epoxidharzen durchgeführt wird.

8. Verfahren nach einem der Ansprüche 1 bis 6, dadurch gekennzeichnet, daß die feste Verbindung zwischen der ersten und der zweiten Schicht durch Wärmeschmelzen erhalten wird.

9. Verfahren nach einem der Ansprüche 1 bis 8, dadurch gekennzeichnet, daß ein Glimmerpapier mit einem spezifischen Gewicht zwischen 40 und 120 g/m² und vorzugsweise zwischen 60 und 90 g/m² und mit einer Dicke zwischen $30.10^{-3}$ mm und $110.10^{-3}$ mm verwendet wird.


**Claims**

1. A method for producing an elementary insulation by wrapping a tape around a conductor entering in the constitution of machines conceived to undergo an impregnation process by an insulating resin, this tape comprising a first layer formed by a porous mica paper, applied on a second layer constituting a thermofusible support, said first layer being covered on its other face by a third layer ensuring in particular the mechanical protection of the tape, characterized in that the tape is disposed in such a way that the thermofusible support is in contact with the conductor.

2. A method according to claim 1, characterized in that the material for the thermofusible support is chosen from the group constituted by un-woven felts on the polyester basis, films on the polyester basis, films on the basis of fluorised polymers.

3. A method according to claim 2, characterized in that a felt on the basis of polyester is used which presents a specific weight comprised between 30 and 60 g/m² and a thickness comprised between $45.10^{-3}$ and $90.10^{-3}$ mm.

4. A method according to claim 2, characterized in that a film on the basis of polyester or on the basis of polymeres is used which presents a thickness comprises between $13.10^{-3}$ and $50.10^{-3}$ mm.

5. A method according to one of claims 1 to 4, characterized in that a glass fabric is used as material constituting the third layer.

6. A method according to claim 5, characterized in that a glass fabric is used, which presents a specific weight comprised between 19 and 40 g/m² and a thickness comprised between $28.10^{-3}$ and $50.10^{-3}$ mm.

7. A method according to one of claims 1 to 6, characterized in that the fixing of the first layer of mica paper to the other layers is carried out by means of epoxid resins.

8. A method according to one of claims 1 to 6, characterized in that the fixing between the first and second layer is carried out by thermofusion.

9. A method according to one of claims 1 to 8, characterized in that a mica paper is used which presents a specific weight comprised between 40 and 120 g/m² and preferably between 60 and 90 g/m², and a thickness comprised between $30.10^{-3}$ mm and $110.10^{-3}$ mm.